# EUROPÄISCHE PATENTSCHRIFT

(11) **EP 3 450 256 B1**
(45) Veröffentlichungstag und Bekanntmachung des Hinweises auf die Patenterteilung: **18.03.2020**
(21) Anmeldenummer: 18191888.9
(22) Anmeldetag: 31.08.2018
(51) Int. Cl.: B60R 5/04

(54) **LADEBODEN FÜR DEN GEPÄCKRAUM EINES KRAFTFAHRZEUGES**
LOADING FLOOR FOR AN AUTOMOBILE LUGGAGE COMPARTMENT
PLANCHER DE CHARGEMENT D'UN COMPARTIMENT À BAGAGES D'UN VÉHICULE AUTOMOBILE

(30) Priorität: 31.08.2017 DE 102017215224
(43) Veröffentlichungstag der Anmeldung: 06.03.2019
(73) Patentinhaber: Ford Global Technologies, LLC, Dearborn, MI 48126 (US)
(72) Erfinder: Blümel, Carsten, 51427 Bergisch Gladbach (DE)
(74) Vertreter: Dörfler, Thomas

(56) Entgegenhaltungen:
- EP-A1- 2 878 489
- DE-A1- 19 802 077
- US-A- 5 570 921

## Beschreibung

Die Erfindung betrifft einen Ladeboden für den Gepäckraum eines Kraftfahrzeuges nach dem Oberbegriff des Anspruchs 1.

Es ist allgemein bekannt Gepäckräume oder Kofferräume von Kraftfahrzeugen, insbesondere PKW mit beweglichen Ladeböden zu versehen, um den zur Verfügung stehenden Stauraum gegenüber der zerklüfteten Karosserie eben auszugestalten, zu optimieren und gleichzeitig den Zugang zum meist darunterliegenden Reserverad etc. zu erlauben. Die Ladeböden werden dazu oft als mehrteilige Platten ausgeführt, wobei die Teile zueinander beweglich sind.

In der EP 2 292 468 A1 ist ein Ladeboden für den Gepäckraum eines Kraftfahrzeuges bekannt, wobei der flache Ladeboden drei gegeneinander schwenkbare, miteinander verbundene Ladeboden-Elemente aufweist. Die einzelnen Ladeboden-Elemente sind in Schienen an der Seitenwand des Gepäckraumes geführt. Mittels Sperreinrichtungen sind die Ladeboden-Elemente in den Schienen arretierbar, um bestimmte Anordnungen der Ladeboden-Elemente zueinander zu erhalten.

Aus der DE 10 2004 051 622 A1 ist ein Ladeboden für den Gepäckraum eines Fahrzeuges, insbesondere ein mit einer Heckklappe versehenes Kraftfahrzeug bekannt. Der Ladeboden ist dreigeteilt in ein erstes, bewegbares Ladeboden-Element, ein zweites, hinteres Ladeboden-Element und ein drittes, vorderes Ladeboden-Element, wobei das zweite und dritte Ladeboden-Element nebeneinander über die Fläche des Laderaumbodens angeordnet sind, und das bewegbare Ladeboden-Element relativ zu den beiden anderen Laderaum-Elementen bewegbar gehalten ist, derart, dass es zu einem der anderen beiden Ladeboden-Elementen planar angrenzend positionierbar und aus dieser Position heraus zum Überschieben über das angrenzende Ladeboden-Element bewegbar ist.

Die DE 10 2008 035 398 A1 offenbart einen Ladeboden in einem Kraftfahrzeug, der einen hinteren Ladebodenabschnitt, der um eine erste Schwenkachse verschwenkbar ist, und einen vorderen Ladebodenabschnitt, der um eine zweite Schwenkachse relativ zum ersten Ladebodenabschnitt verschwenkbar ist, sowie einen Griff zum Handhaben des Ladebodens umfasst. Zur Vereinfachung der Handhabe des Ladebodens ist der Griff in Form einer Handhabe zwischen dem vorderen und dem hinteren Ladebodenabschnitt ausgebildet, deren Längsachse im Wesentlichen parallel zu den Schwenkachsen ausgerichtet ist.

US 5,570,921 offenbart eine faltbare Ladungsauskleidung für Kraftfahrzeuge, die vorzugsweise aus einem einheitlichen Rohling aus polymerem Wellpappenmaterial gebildet ist. Die Auskleidung ist so geformt, dass sie eine starre Abdeckung über der Seiten- und Bodenfläche des Laderaums eines Fahrzeugs bildet, um die Integrität der Oberfläche des Laderaums eines Fahrzeugs zu schützen, während sie gleichzeitig einen offenen Container zum Tragen von Ladungsgegenständen bereitstellt. Bei Nichtgebrauch kann die Ladungsauskleidung in eine kompakte Lagerkonfiguration umgeklappt werden. Die Ladungsauskleidung ist auch mit verstärkten Ausschnittgriffen ausgestattet, um das Entfernen der Auskleidung und der Ladung aus dem Automobil zu erleichtern oder um den Transport und die Lagerung im eingeklappten Zustand zu erleichtern.

Aufgabe der Erfindung ist es demgegenüber, einen Ladeboden bereitzustellen, der die flexible Nutzung des zur Verfügung stehenden Stauraums verbessert und der eine einfache Handhabung des Ladebodens ermöglicht.

Diese Aufgabe wird durch den in Anspruch 1 wiedergegebenen Ladeboden gelöst.

Indem zwei Ladeboden-Elemente im zusammengefalteten Zustand mittels Arretierungsmittel gegeneinander arretierbar sind, lässt sich der dreiteilige Ladeboden sehr viel leichter handhaben und ist in der Anwendung flexibler. Dabei kann sowohl das dritte, vordere Ladeboden-Element mit dem zweiten, mittleren Ladeboden-Element und/oder das erste, hintere Ladeboden-Element mit dem zweiten, mittleren Ladeboden-Element mittels Arretierungsmittel arretierbar sein.

Vorteilhaft ist es, wenn das erste und zweite Ladeboden-Element und das zweite und dritte Ladeboden-Element derart gegen einander bewegbar ausgestaltet sind, dass sie durch eine jeweils zwischen den Ladeboden-Elementen vorgesehene scharnierartige Verbindung gegeneinander verschwenkbar und auch aufeinander faltbar sind, und die scharnierartige Verbindung eine 180 Grad Schwenkverbindung ist, die zwischen dem ersten und zweiten Ladeboden-Element eine Verschwenkung in eine Richtung, vorzugsweise nach oben, und zwischen dem zweiten und dritten Ladeboden-Element eine Verschwenkung in die umgekehrte Richtung, vorzugsweise nach unten, erlaubt, so dass im Zusammenspiel mit vorderen und/oder hinteren Halterungen am Fahrzeug unterschiedliche Stellungen des Ladebodens einstellbar sind, es möglich ist, ein flexibles Nutzungskonzept des Kofferraums bereitzustellen.

Es ist somit möglich, den Ladeboden in unterschiedlichen Stellungen durch Verschwenken und/oder Falten der einzelnen Ladeboden-Elemente zu einander einzustellen, um unterschiedliche Stauraumanforderungen zu erfüllen.

So können die Ladeboden-Elemente nicht nur die übliche flache Stellung einnehmen, sondern aufeinander gefaltet werden und auch gegen einander verschwenkt werden. So ist die Verwendung des vorderen Ladebodenelements (mit oder ohne das mittlere Ladebodenelement) als verschwenkbare Klappe für einen schnellen Zugriff auf den Stauraum unterhalb möglich. Auch kann z.B. auch das vordere und mittlere bzw. hintere und mittlere Ladeboden-Element auf einander gefaltet werden, um einen Zugang zu weiterem Stauraum unterhalb des Ladebodens zu ermöglichen.

Entsprechend können auch alle drei Teile aufeinander gefaltet und verstaut werden, um den Zugang vollständig zu erlauben. Dann wird das so erhaltene "Paket" vorzugsweise an der Rückseite der Rücksitze hochgeklappt angeordnet.

Daher ist es von Vorteil, wenn die vorderen Halterungen derart seitlich am Fahrzeug angeordnet sind, dass das zweite, mittlere Ladeboden-Element und das dritte, vordere Ladeboden-Element gemeinsam klappenartig aufstellbar sind.

Ferner ist es von Vorteil, wenn die hinteren Halterungen derart im Bereich der Rückseite der Rücksitze angeordnet sind, dass der komplett zusammengefaltete Ladeboden als Paket an die Rückseite der Rücksitze anlegbar ist.

Sinnvollerweise ist im unteren Bereich am Fuß der Rückseite der Rücksitze eine Aufnahme für das erste, hinter Ladeboden-Element angeordnet, die z. B. schlitzartig ausgestaltet ist, um beim Hochklappen des Ladeboden-Pakets das Stirnende des ersten Ladeboden-Elements aufzunehmen. Somit kann ein einfacheres Hochklappen erzielt werden und diese Stellung gleichzeitig im Zusammenspiel mit einer optionalen Fixierung eingehalten werden.

Mit anderen Worten, es ist bevorzugt, wenn zusätzlich im Bereich der Rückseite der Rücksitze eine lösbare flexible Fixierung angeordnet ist.

Wenn die, insbesondere das zweite mittlere und erste vordere Ladeboden-Element, ladeboden-Elemente Arretierungsmittel umfassen, um aufeinander lösbar fixiert zu werden, können sie in der umgelegten Stellung (aufeinander gefaltet) gesichert werden.

Die Arretierungsmittel können Elektromagneten und/oder federvorgespannte Hebel-Riegel-Anordnungen (ähnlich den Türverriegelungen) und/oder Haken-Spanngummi-Anordnungen umfassen.

Wenn das erste vordere Ladeboden-Element (zusätzlich) seitlich abgeordnete Arretierungsmittel umfasst, kann es in einer aufgestellten Stellung an einer Fahrzeugseitenwand lösbar fixiert werden. Vorzugsweise sind die Arretierungsmittel an beiden Seiten vorgesehen. Diese können riegelartig ausgestaltet sein und greifen in der ausgeschobenen Stellung dann in Vertiefungen in der Seitenwand zur Arretierung ein.

Wenn die scharnierartige Verbindung durch ein elastisches Element und ein flexibles Element ausgebildet ist, wobei das elastische Element ausgestaltet ist, um die Ladeboden-Elemente aufeinander zu ziehen, und das flexible Element ausgestaltet ist, um die Verschwenkbarkeit der Ladeboden-Elemente gegeneinander und auch die Faltbarkeit der Ladeboden-Elemente aufeinander zu erlauben, es möglich ist, den zur Verfügung stehenden Stauraum noch flexibler auszunutzen, da der Ladeboden in noch mehr unterschiedlichsten Konfigurationen und Stellungen einsetzbar ist.

So kann z.B. das vordere (zum Ende des Fahrzeugs nächst gelegene) Ladeboden-Element etwa senkrecht aufgestellt und arretiert werden, um den Stauraum zweizuteilen .

All diese Funktionen sind u. A. möglich aufgrund der speziellen scharnierartigen Verbindung zwischen den einzelnen Ladeboden-Elementen, d.h. zwischen dem ersten und zweiten und vorzugsweise zwischen dem zweiten und dritten.

Die scharnierartige Verbindung umfasst ein elastisches Element und ein flexibles Element.

Das elastische Element ist ausgestaltet, um die Ladeboden-Elemente aufeinander zu ziehen, d.h. es ist zwar dehnbar, aber erzeugt dabei eine rückstellende Kraft. Beispielsweise ist das elastische Element ein aus Kautschuk oder ähnliches gebildeter Streifen.

Das flexible Element ist ausgestaltet, um die Verschwenkbarkeit der Ladeboden-Elemente gegeneinander und auch die Faltbarkeit der Ladeboden-Elemente aufeinander zu erlauben, d.h. es stellt die eigentliche Scharnierfähigkeit bereit. Beispielsweise ist das flexible Element ein Gewebeband.

Vorzugsweise ist das elastische Element zwischen den gegenüberliegenden Stirnseiten der jeweiligen Ladeboden-Elemente angeordnet. So bewirkt es ein Anliegen der Elemente aneinander. Dabei kann das elastische Element mit einem Ende jeweils in einer in der jeweiligen Stirnseite angeordneten Nut fixiert sein.

In einer bevorzugten Ausführungsform verbindet das flexible Element jeweils eine Oberseite eines Ladeboden-Elements mit einer Unterseite des anderen Ladeboden-Elements gegenüberliegender Stirnseitenbereiche der jeweiligen Ladeboden-Elemente, oder umgekehrt.

Es versteht sich, dass auch jeweils mehr als eine scharnierartige Verbindung bzw. elastisches und flexibles Element zwischen den Ladeboden-Elementen vorgesehen sein kann.

Denkbar ist auch, dass der erfindungsgemäße Ladeboden ein sekundärer Ladeboden ist, der über Abstandhalter zu einem unteren primären Ladeboden beabstandet angeordnet ist. Somit kann der Stauraum noch variabler ausgebnutzt werden und eine Nachrüstung ist möglich.

Die Abstandhalter können seitlich angeordnete Schienen sein, die ggf. auch entfernbar bzw. nachrüstbar sind.

Weitere Merkmale und Einzelheiten der Erfindung ergeben sich aus der nachfolgenden Beschreibung der Zeichnung. Es zeigen:
Fig. 1 eine schematische perspektivische Ansicht eines Ladebodens für den Kofferraum eines PKW;
Fig. 2 eine schematische Ansicht auf den Ladeboden aus Figur 1 beim schrittweisen Zusammenfalten;
Fig. 3 eine Übersicht über mögliche Stellungen und Verwendungen des Ladebodens aus Figur 1 in einem Kofferraum;
Fig. 4 eine schematische perspektivische Ansicht auf alternative Arretierungsmittel zwischen Ladeboden-Elementen;
Fig. 5 eine schematische Schnittansicht auf Arretierungsmittel zwischen Ladeboden-Elementen;
Fig. 6 eine schematische Schnittansicht auf weitere alternative Arretierungsmittel zwischen Ladeboden-Elementen; und
Fig. 7 eine schematische Ansicht auf eine alternative scharnierartige Verbindung in unterschiedlichen Stellungen;
Fig. 8 eine schematische perspektivische Ansicht auf den Ladeboden aus Figur 7 in der aufgestellten Stellung des vorderen Ladebodens.

In den Figuren ist ein als Ganzes mit 1 bezeichneter Ladeboden gezeigt.

Der Ladeboden 1 umfasst ein erstes, hinteres Ladeboden-Element 2, ein zweites, mittleres Ladeboden-Element 3 und ein drittes, vorderes Ladeboden-Element 4.

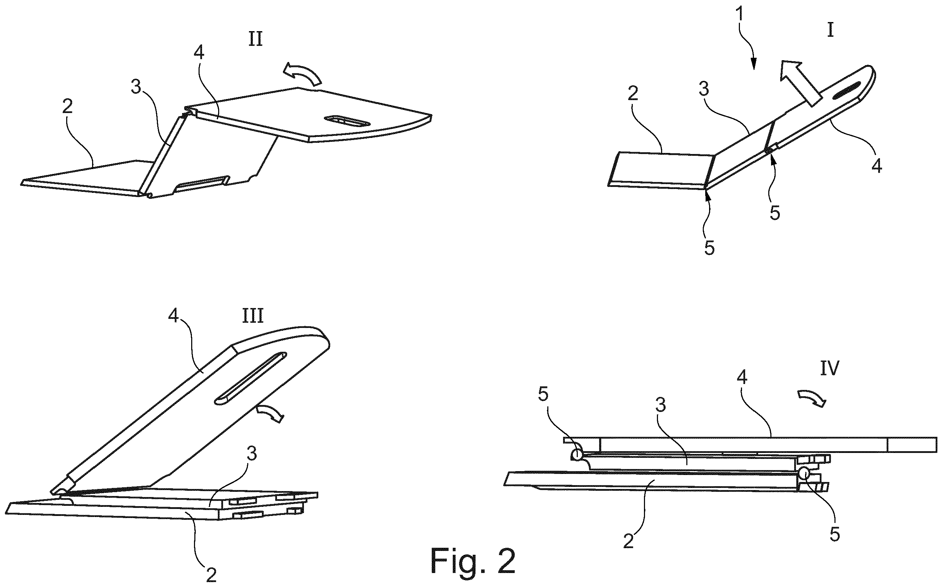

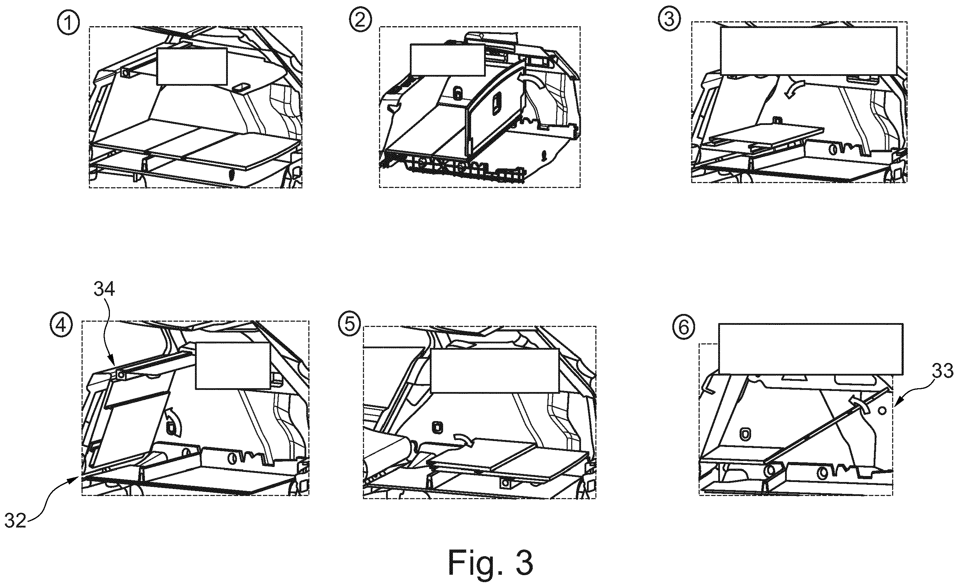

Das erste und zweite Ladeboden-Element 2, 3 und das zweite und dritte Ladeboden-Element 3, 4 sind jeweils über eine scharnierartige Verbindung 5 derart gegen einander bewegbar ausgestaltet, dass sie gegeneinander verschwenkbar und aber auch aufeinander faltbar sind, wie sich dies aus Figuren 2 und 3 beispielsweise ergibt.

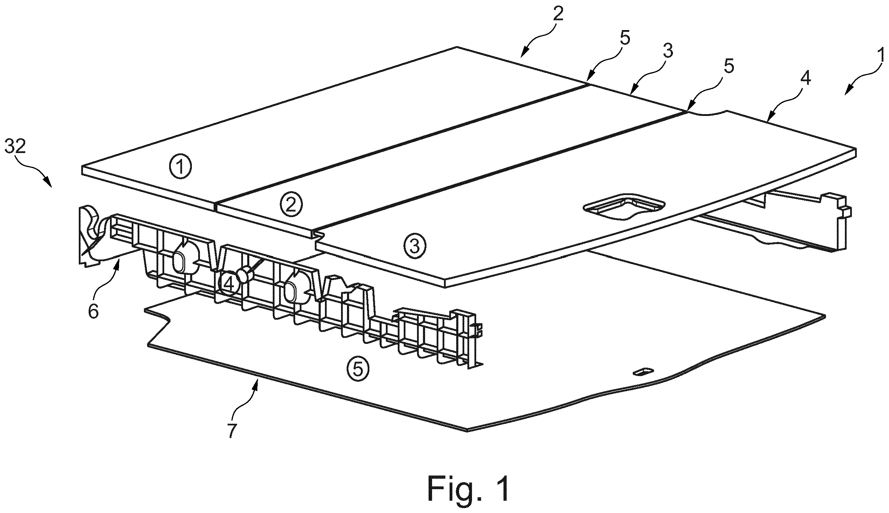

In der Figur 1 ist der erfindungsgemäße Ladeboden 1 ein sekundärer Ladeboden, der über Abstandhalter 6 zu einem unteren primären Ladeboden 7 beabstandet angeordnet ist. Die Abstandhalter 6 sind seitlich angeordnete Schienen.

Die scharnierartige 180 Grad Verbindung 5 ist jeweils durch mindestens bekannte 180 Grad Scharniere ausgebildet. Meist werden über die Breite der Ladeboden-Elemente 2,3,4 mehrere Scharnierelemente angeordnet sein. Es besteht auch die Möglichkeit das die Funktion des Scharniers durch ein Gewebeband hergestellt wird. Somit können die aus Figur 2 und 3 ersichtlichen Stellungen und Anordnungen eingenommen werden.

In Figur 2 wird der Ladeboden 1 beim Aufschwenken bzw. schrittweisen Zusammenfalten in Richtung der Pfeile gezeigt.

Im Schritt I wird zunächst das vordere Ladeboden-Element 4 klappenartig zusammen mit dem mittleren Ladeboden-Element 3 gegenüber dem hinteren Element 2 angehoben. So kann der Stauraum darunter erreicht werden. Zusätzlich ist an der seitlichen Kofferraumwandung jeweils eine Halterung (33 in Figur 3) vorgesehen, um diese Stellung zumindest vorübergehend zu halten.

Dann erfolgt im Schritt II ein Abknicken der Ladeboden-Elemente 4 und 3 gegeneinander, so dass im Schritt III das mittlere Ladeboden-Element 3 auf dem hinteren Ladeboden-Element 2 aufliegt.

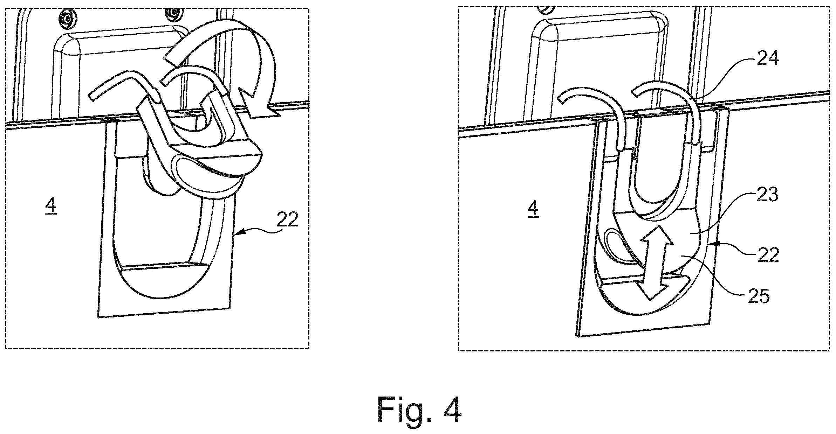

Anschließend wird das vordere Ladeboden-Element 4 auf das mittlere Ladeboden-Element 3 abgelegt. Beim Ablegen bzw. aufeinander Falten können die Ladeboden-Elemente aneinander über Arretierungsmittel lösbar fixiert werden. Dies kann selbsttätig über Einrasten oder auch manuell erfolgen (vgl. Figur 4, 5 und 6).

Eine sehr vorteilhafte Funktionalität ergibt sich aus Schritt IV, wenn die Arretierung nur zwischen dem dritten Ladeboden-Element 4 und dem zweiten Ladeboden-Element 3 erfolgt. Dann kann auf eine Arretierung zwischen dem ersten Ladeboden-Element 2 und dem zweiten Ladeboden-Element 3 verzichtet werden, wenn das ganze Paket angehoben werden soll. Durch das Scharnier 5 zwischen dem hinteren Ladeboden-Element 2 und dem mittleren Ladeboden-Element 3 werden, wenn das vordere Ladeboden-Element 4 angehoben wird, alle drei Ladeboden-Element (2, 3, 4) gemeinsam als Paket angehoben.

Die so erzielte Paketanordnung (Schritt IV) der Ladeboden-Elemente kann dann gegen die Rückseite der Rücksitze aufgefaltet und dort arretiert bzw. fixiert werden, um den Ladeboden komplett aus dem Weg zu schaffen. Daher ist an der seitlichen Kofferraumwandung jeweils eine Halterung (34 in Figur 3) vorgesehen, um diese Stellung zumindest vorübergehende zu halten. Alternativ kann auch eine Fixierung nach Art der Figur 4 eingesetzt werden.

Damit das Hochfalten besser gelingt, ist in den Abstandhaltern 6 im unteren Bereich der Rückseite der Rückenlehnen eine schlitzförmige Aufnahme 32 vorgesehen, in die das Stirnende des ersten Ladeboden-Elements beim Aufstellen des Pakets hineinrutscht. Die erleichtert zudem die Fixierung als Gegenlager.

Figur 3 zeigt eine Übersicht über mögliche Stellungen (1) - (6) und Verwendungen des Ladebodens 1 aus Figur 1 in einem Kofferraum.

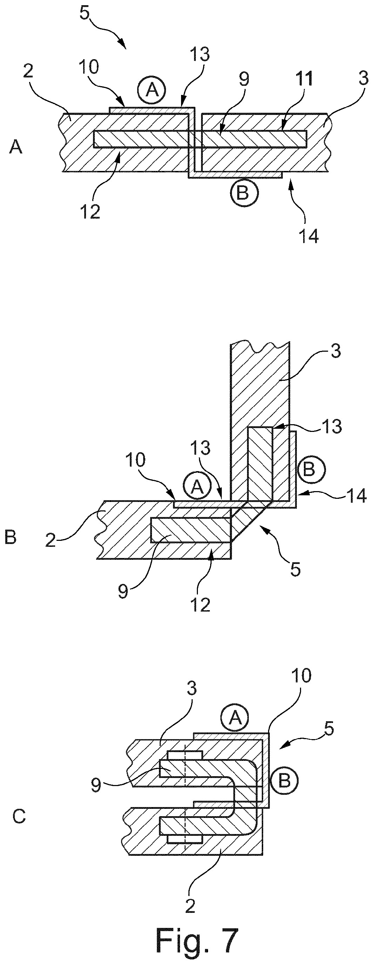

Die Stellung 1 zeigt die flache Faltung. In Stellung 2 ist das vordere, zum Ende des Fahrzeugs nächst gelegene Ladeboden-Element 4 etwa senkrecht aufgestellt und arretiert, um den Stauraum zweizuteilen. Das ist mit einer flexiblen und elastischen Verbindung (Fig. 7) der Ladebodenelemente möglich.

Auch möglich ist es, das vordere 4 und mittlere 3 (Stellung (3)) bzw. hintere 2 und mittlere 3 Ladeboden-Element (Stellung (5)) auf einander zu falten, um bei umgelegter Rückbank einen Zugang zu weiterem Stauraum unterhalb des Ladebodens 1 zu ermöglichen.

Entsprechend können auch alle drei Elemente 2, 3, 4 aufeinander gefaltet und verstaut werden (Stellung (4)), um den Zugang vollständig zu erlauben. Dabei können alle Elemente z.B. über eine lösbare Befestigung an der Rückseite der Rücksitzbank festgemacht werden.

Denkbar ist zudem die Verwendung des vorderen Ladeboden-Elements 4, mit oder ohne das mittlere Ladebodenelement 3, als verschwenkbare Klappe in Stellung (6) für einen schnellen Zugriff auf den Stauraum unterhalb.

Wenn die Ladeboden-Elemente 3 bzw. 4 auf den jeweils anderen Ladeboden-Elementen 2 bzw. 3 abgelegt bzw. aufgefaltet sind, können die Ladeboden-Elemente aneinander arretiert werden.

Figur 4 zeigt eine alternative Arretierung zwischen Ladeboden-Elementen, die sich gut für die Befestigung der drei zusammengefalteten Ladeboden-Elemente an der Rückseite der Rücksitzlehne oder für die Arretierung des Ladeboden-Elements 3 zu 4 eignet; siehe auch Figur 4, Stellung (4).

Die Arretierung umfasst ein an der Unterseite des Ladeboden-Elements 4 angeordnete Aufnahmemulde 22, in die ein Haken 23 eingreifen kann, der über elastische Spanngummis 24 an das hintere Ladeboden-Element 2 befestigt ist. Der Haken 23 kann einen Griffhinterschnitt 25 für Finger eines Bedieners ausbilden.

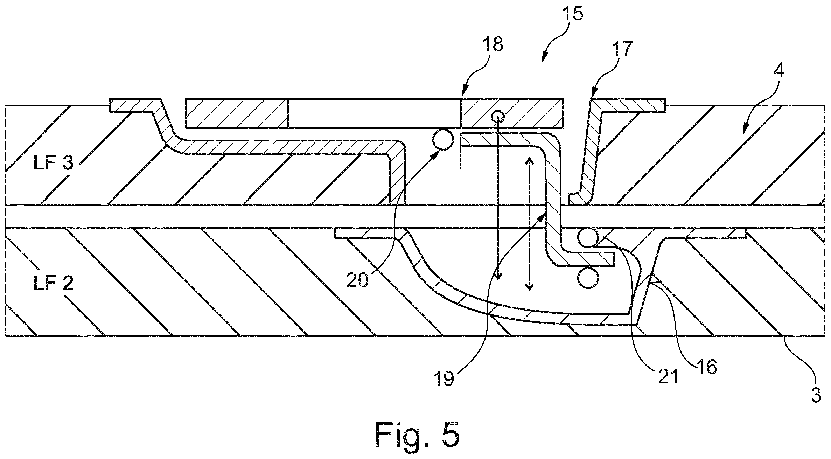

In Figur 5 ist eine weitere Variante gezeigt, in der das Ladeboden-Element 4 auf dem Ladeboden-Element 3 arretiert ist. Diese

Dazu weist das Ladeboden-Element 4 einen Griff 15 auf, der in eine Mulde 16 des Ladeboden-Elements 3 eingreift.

Der Griff 15 ist in einem entsprechenden Durchbruch 17 in dem Ladeboden-Element 4 angeordnet und weist eine über eine Feder 20 vorgespannte Hebellasche 18 mit einem herausstehenden Arretierhaken 19 auf, der beim Eingriff in die Mulde 16 arretierend hintergreift. Die Feder 20 bewirkt die selbsttätige Einnahme dieser Stellung. Dies erleichtert auch die Fixierung des Ladebodenpakets (Stellung 4, vgl. Figur 3), da das erste und zweite Ladenboden-Element bereits mit einander verbunden sind.

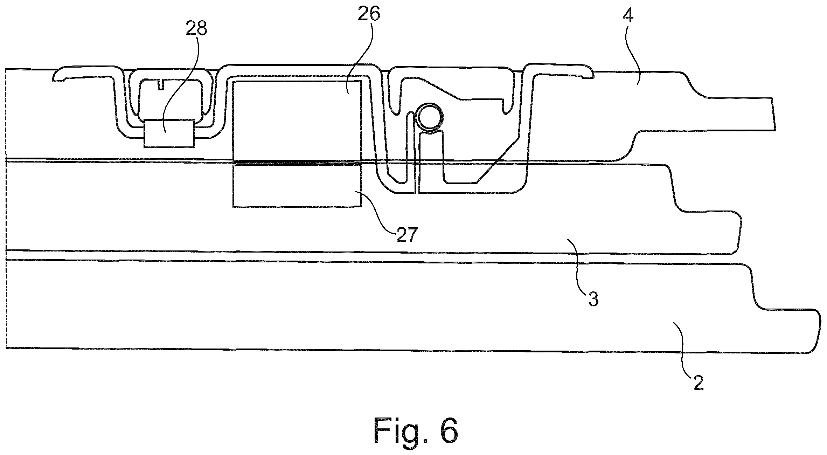

Figur 6 zeigt eine weitere alternative Arretierung zwischen Ladeboden-Elementen, die auf dem Einsatz von Elektromagneten 26, beruht, die beispielsweise in die Ladeboden-Elemente 4 (oder auch 3) eingelassen sind und mit entsprechenden Metalleinsätzen 27 in dem Ladeboden-Element 3 (oder auch 2) beim Beaufschlagen mit Strom wechselwirken (aktivieren). Alternativ kann auch ein Abschalten von Strom eine Aktivierung bedingen.

Zur Regelung der Stromzufuhr kann in dem entsprechenden Ladebodenelement (hier 4) ein Schalter 28 integriert sein.

Die alternative scharnierartige Verbindung 5 (vgl. Figur 7) ist jeweils durch mindestens ein elastisches Element 9 und ein flexibles Element 10 ausgebildet. Meist werden über die Breite der Ladeboden-Elemente 2,3,4 mehrere elastische Elemente 9 und ein flexible Elemente 10 angeordnet sein.

Das elastische Element 9 ist zwischen den gegenüberliegenden Stirnseiten der jeweiligen Ladeboden-Elemente 2,3 bzw. 3, 4 angeordnet. So bewirkt es ein Anliegen der Elemente 2,3 bzw. 3, 4 aneinander. Dabei ist das elastische Element 9 mit einem Ende jeweils in einer in der jeweiligen Stirnseite angeordneten Nut 11, 12 fixiert.

Das flexible Element 10 verbindet jeweils eine Oberseite 13 eines Ladeboden-Elements mit einer Unterseite 14 des anderen Ladeboden-Elements gegenüberliegender Stirnseitenbereiche der jeweiligen Ladeboden-Elemente 2,3 bzw. 3, 4, oder umgekehrt. Es weist also im Schnitt etwa eine Z-Form auf.
Mit anderen Worten das flexible Element 10 ist jeweils einer Oberseite 13 eines Ladeboden-Elements und an einer Unterseite 14 des anderen Ladeboden-Elements fixiert und durchquert locker (ohne Fixierung) den Stirnseitenspalt.

Somit können die Ladeboden-Elemente 2,3 bzw. 3,4 nicht nur eine flache Stellung (A) einnehmen, sondern auch eine aufgestellte Stellung (B), in der das elastische Element 9 gedehnt ist und eine rückstellende Kraft bewirkt, sowie eine aufeinander gefaltete Stellung (C), in der die Ladeboden-Elemente 2,3 bzw. 3,4 aufeinanderliegen, so dass das elastische Element 9 "überdehnt" ist.

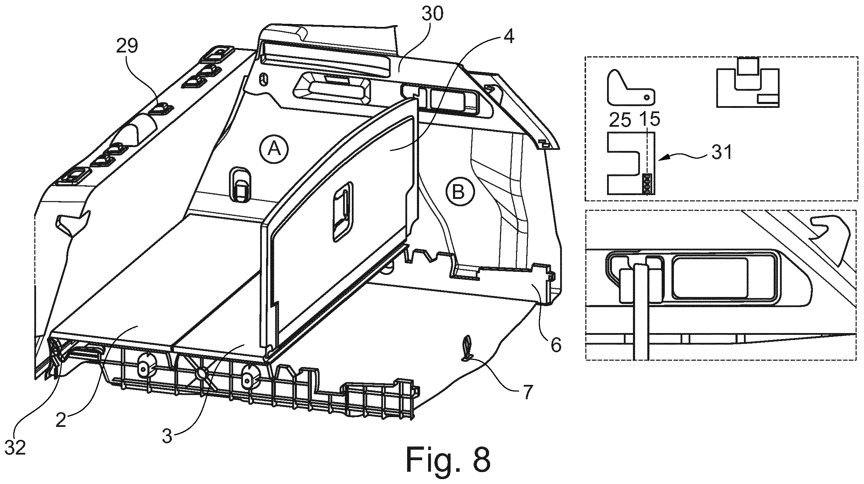

Anhand von Figur 8 soll eine beispielhafte Stellung (hier Stellung (2) aus Figur 3) näher erläutert werden, in der die besondere Variante der scharnierartigen Verbindung aus Figur 7 eingesetzt wird.

Man erkennt die aufgeschwenkte Stellung (4) des Ladeboden-Elements 4 im Kofferraum hinter einer Rücksitzbank 29. Das Ladeboden-Elements 4 ist dabei an einer Seitenverkleidung 30 des Kofferraums lösbar arretiert.
Der Ladeboden 1 liegt mit den Ladeboden-Elementen 2, 3 auf den Abstandhaltern 6 auf dem primären Ladeboden 7 auf.

Durch das Aufschwenken entstehen zwei getrennte Ladebereiche A und B, die z.B. für trockene und nasse Sachen getrennt verwendet werden können.

Die Arretierung des Ladeboden-Elements 4 ist an der Seitenverkleidung 30 erfolgt über einen ein- und ausfahrbaren H-förmigen Riegel 31, wobei der Rand des Ladeboden-Elements 4 zwischen den Stegen des "H" in der aus gefahrenen Stellung des Riegels 31 aufgenommen wird.

Der Riegel 31 ist über einen durch eine Feder beaufschlagten Push-Push-Mechanismus bekannter Art ein- und ausfahrbar ausgestaltet. Sinnvollerweise erfolgt die Arretierung an beiden Fahrzeugseiten.

## Patentansprüche

1. Ladeboden für den Gepäckraum eines Kraftfahrzeuges, insbesondere eines mit einer Heckklappe versehenes Personenkraftwagens, wobei der flache Ladeboden (1) in ein erstes, hinteres Ladeboden-Element (2), ein zweites, mittleres Ladeboden-Element (3) und ein drittes, vorderes Ladeboden-Element (4) dreigeteilt ist, wobei das erste und zweite Ladeboden-Element (2, 3) und das zweite und dritte Ladeboden-Element (3, 4) gegen verschwenkbar sind mittels einer jeweils zwischen den Ladeboden-Elementen (2, 3, 4) angeordneten scharnierartigen Verbindung (5),
wobei zwei Ladeboden-Elemente im zusammengefalteten Zustand mittels Arretierungsmittel gegeneinander arretierbar sind, **dadurch gekennzeichnet, dass** das Arretierungsmittel ein Griff (15) des vorderen Ladebodens-Elements (4) ist, der in eine Mulde (16) des mittleren Ladeboden-Elements (3) eingreift.

2. Ladeboden nach Anspruch 1, **dadurch gekennzeichnet, dass** das dritte, vordere Ladeboden-Element (4) auf dem zweiten, mittleren Ladeboden-Element (3) mittels Arretierungsmittel arretierbar ist.

3. Ladeboden nach einem der vorhergehenden Ansprüche, **dadurch gekennzeichnet, dass** die scharnierartige Verbindung eine 180 Grad Schwenkverbindung (5) ist, die zwischen dem ersten und zweiten Ladeboden-Element (2, 3) eine Verschwenkung in eine Richtung, vorzugsweise nach oben, und zwischen dem zweiten und dritten Ladeboden-Element (3, 4) eine Verschwenkung in die umgekehrte Richtung, vorzugsweise nach unten, erlaubt.

4. Ladeboden nach einem der vorherigen Ansprüche, **dadurch gekennzeichnet, dass** die Arretierungsmittel Elektromagneten und/oder federvorgespannte Hebel-Riegel-Anordnungen und/oder Haken-Spanngummi-Anordnungen umfassen.

5. Ladeboden nach einem der vorhergehenden Ansprüche, **dadurch gekennzeichnet, dass** ein Ladeboden-Element seitlich abgeordnete Arretierungsmittel umfasst.

6. Ladeboden nach einem der vorhergehenden Ansprüche, **dadurch gekennzeichnet, dass** eine vordere Halterung (34) derart seitlich am Fahrzeug angeordnet ist, dass das zweite, mittlere Ladeboden-Element (3) und das dritte, vordere Ladeboden-Element (4) gemeinsam klappenartig aufstellbar sind.

7. Anordnung aus einem Ladeboden nach einem der vorhergehenden Ansprüche und einem Rücksitz, **dadurch gekennzeichnet, dass** eine hintere Halterung (33) derart im Bereich der Rückseite der Rücksitze angeordnet ist, dass der komplett zusammengefaltete Ladeboden (1) als Paket an die Rückseite der Rücksitze anlegbar ist.

8. Anordnung nach Anspruch 7, **dadurch gekennzeichnet, dass** im unteren Bereich am Fuß der Rückseite der Rücksitze eine Aufnahme für das erste, hinter Ladeboden-Element (2) angeordnet ist.

9. Anordnung nach Anspruch 7 oder 8, **dadurch gekennzeichnet, dass** zusätzlich im Bereich der Rückseite der Rücksitze (29) eine lösbare flexible Fixierung angeordnet ist.

10. Ladeboden nach einem der vorhergehenden Ansprüche 1 - 6, **dadurch gekennzeichnet, dass** die scharnierartige Verbindung durch ein elastisches Element (9) und ein flexibles Element (10) ausgebildet ist, wobei das elastische Element (9) ausgestaltet ist, um die Ladeboden-Elemente (2, 3) aufeinander zu ziehen, und das flexible Element (10) ausgestaltet ist, um die Verschwenkbarkeit der Ladeboden-Elemente (2, 3) gegeneinander und auch die Faltbarkeit der Ladeboden-Elemente (2, 3) aufeinander zu erlauben.

11. Anordnung nach Anspruch 8, **dadurch gekennzeichnet, dass** das elastische Element (9) zwischen den gegenüberliegenden Stirnseiten der jeweiligen Ladeboden-Elemente (2, 3) angeordnet ist.

12. Anordnung nach Anspruch 9, **dadurch gekennzeichnet, dass** das elastische Element mit einem Ende jeweils in einer in der jeweiligen Stirnseite angeordneten Nut fixiert ist.

13. Ladeboden nach einem der vorhergehenden Ansprüche 1 - 6 oder 10, **dadurch gekennzeichnet, dass** das flexible Element jeweils eine Oberseite eines Ladeboden-Elements mit einer Unterseite des anderen Ladeboden-Elements gegenüberliegender Stirnseitenbereiche der jeweiligen Ladeboden-Elemente, oder umgekehrt, verbindet.

## Claims

1. Loading floor for the luggage compartment of a motor vehicle, in particular of a passenger car provided with a tailgate, wherein the flat loading floor (1) is divided into three parts: a first, rear loading-floor element (2), a second, middle loading-floor element (3) and a third, front loading-floor element (4), wherein the first and second loading-floor elements (2, 3) and the second and third loading-floor elements (3, 4) can be counter-pivoted by means of a hinge-like connection (5) respectively arranged between the loading-floor elements (2, 3, 4),
wherein two loading-floor elements can be locked relative to one another in the folded-together state by locking means, **characterized in that** the locking means is a grip (15) of the front loading-floor element (4) that engages into a recess (16) of the middle loading-floor element (3) .

2. Loading floor according to Claim 1, **characterized in that** the third, front loading-floor element can be locked on the second, middle loading-floor element (3) by locking means.

3. Loading floor according to either of the preceding claims, **characterized in that** the hinge-like connection is a 180 degree pivoting connection (5), which allows a pivoting between the first and second loading-floor elements (2, 3) in one direction, preferably upwards, and allows a pivoting between the second and third loading-floor elements (3, 4) in the opposite direction, preferably downwards.

4. Loading floor according to one of the preceding claims, **characterized in that** the locking means comprise electromagnets and/or spring-pretensioned lever/latch arrangements and/or hook/bunjee straps arrangements.

5. Loading floor according to one of the preceding claims, **characterized in that** a loading-floor element comprises laterally arranged locking means.

6. Loading floor according to one of the preceding claims, **characterized in that** a front mounting (34) is arranged laterally on the vehicle in such a manner that the second, middle loading-floor element (3) and the third, front loading-floor element (4) can be raised up together in a flap-like manner.

7. Arrangement comprising a loading floor according to one of the preceding claims and comprising a back seat, **characterized in that** a rear mounting (33) is arranged in the region of the back side of the back seat in such a manner that the completely folded-together loading floor (1) can be placed as one unit against the back side of the back seat.

8. Arrangement according to Claim 7, **characterized in that** a receptacle for the first, rear loading-floor element (2) is arranged in the bottom region at the base of the back side of the back seat.

9. Arrangement according to Claim 7 or 8, **characterized in that**, in addition, a detachable flexible fixing means is arranged in the region of the back side of the back seat (29).

10. Loading floor according to one of the preceding Claims 1-6, **characterized in that** the hinge-like connection is formed by an elastic element (9) and a flexible element (10), wherein the elastic element (9) is designed to pull the loading-floor elements (2, 3) towards one another and the flexible element (10) is designed to allow the loading-floor elements (2, 3) to be able to pivot relative to one another and also to allow the loading-floor elements (2, 3) to be able to fold onto one another.

11. Arrangement according to Claim 8, **characterized in that** the elastic element (9) is arranged between the opposite end faces of the respective loading-floor elements (2, 3).

12. Arrangement according to Claim 9, **characterized in that** each end of the elastic element is fixed in a slot arranged in the respective end face.

13. Loading floor according to one of the preceding Claims 1-6 or 10, **characterized in that** the flexible element in each case connects a top side of one loading-floor element to a bottom side of the other loading-floor element of opposite end-face regions of the respective loading-floor elements, or vice versa.

## Revendications

1. Fond de chargement pour le compartiment à bagages d'un véhicule automobile, en particulier d'un véhicule automobile léger pourvu d'un hayon arrière, le fond de chargement plat (1) étant divisé en un premier élément de fond de chargement arrière (2), un deuxième élément de fond de chargement central (3) et un troisième élément de fond de chargement avant (4), le premier et le deuxième élément de fond de chargement (2, 3) et le deuxième et le troisième élément de fond de chargement (3, 4) pouvant pivoter au moyen d'une liaison de type charnière (5) disposée à chaque fois entre les éléments de fond de chargement (2, 3, 4),
deux éléments de fond de chargement dans l'état replié pouvant être bloqués l'un contre l'autre au moyen de moyens de blocage, **caractérisé en ce que** le moyen de blocage est une poignée (15) de l'élément de fond de chargement avant (4) qui s'engage dans un creux (16) de l'élément de fond de chargement central (3).

2. Fond de chargement selon la revendication 1, **caractérisé en ce que** le troisième élément de fond de chargement avant (4) peut être bloqué sur le deuxième élément de fond de chargement central (3) au moyen d'un moyen de blocage.

3. Fond de chargement selon l'une quelconque des revendications précédentes, **caractérisé en ce que** la liaison de type charnière est une liaison pivotante sur 180° (5) qui permet un pivotement dans une direction, de préférence vers le haut, entre le premier et le deuxième élément de fond de chargement (2, 3), et un pivotement dans le sens opposé, de préférence vers le bas, entre le deuxième et le troisième élément de fond de chargement (3, 4).

4. Fond de chargement selon l'une quelconque des revendications précédentes, **caractérisé en ce que** les moyens de blocage comprennent des électroaimants et/ou des agencements levier-verrou précontraints par ressort et/ou des agencements crochet-tendeur élastique.

5. Fond de chargement selon l'une quelconque des revendications précédentes, **caractérisé en ce qu'**un élément de fond de chargement comprend des moyens de blocage disposés latéralement.

6. Fond de chargement selon l'une quelconque des revendications précédentes, **caractérisé en ce qu'**une fixation avant (34) est disposée latéralement sur le véhicule de telle sorte que le deuxième élément de fond de chargement central (3) et le troisième élément de fond de chargement avant (4) puissent être placés ensemble à la manière d'un volet.

7. Agencement constitué d'un fond de chargement selon l'une quelconque des revendications précédentes et un siège arrière, **caractérisé en ce qu'**une fixation arrière (33) est disposée dans la région du côté arrière du siège arrière de telle sorte que le fond de chargement complètement replié (1) puisse être placé sous forme de paquets contre le côté arrière des sièges arrière.

8. Agencement selon la revendication 7, **caractérisé en ce qu'**un logement pour le premier élément de fond de chargement arrière (2) est disposé dans la région inférieure au niveau de la base du côté arrière des sièges arrière.

9. Agencement selon la revendication 7 ou 8, **caractérisé en ce qu'**une fixation amovible flexible est en outre disposée dans la région du côté arrière des sièges arrière (29).

10. Fond de chargement selon l'une quelconque des revendications précédentes 1 à 6, **caractérisé en ce que** la liaison de type charnière est réalisée par un élément élastique (9) et un élément flexible (10), l'élément élastique (9) étant configuré de manière à attirer l'un vers l'autre les éléments de fond de chargement (2, 3), et l'élément flexible (10) étant configuré de manière à permettre le pivotement des éléments de fond de chargement (2, 3) l'un par rapport à l'autre et le repliement des éléments de fond de chargement (2, 3) l'un sur l'autre.

11. Agencement selon la revendication 8, **caractérisé en ce que** l'élément élastique (9) est disposé entre les côtés frontaux opposés des éléments de fond de chargement respectifs (2, 3).

12. Agencement selon la revendication 9, **caractérisé en ce que** l'élément élastique est fixé par une extrémité à chaque fois dans une rainure disposée dans le côté frontal respectif.

13. Agencement selon l'une quelconque des revendications précédentes 1 à 6 ou 10, **caractérisé en ce que** l'élément flexible relie à chaque fois un côté supérieur d'un élément de fond de chargement à un côté inférieur de l'autre élément de fond de chargement de régions frontales opposées des éléments de fond de chargement respectifs, ou inversement.
